# EUROPEAN PATENT APPLICATION

(11) **EP 3 942 925 A1**
(43) Date of publication of application: **26.01.2022**
(21) Application number: 21186254.5
(22) Date of filing: 16.07.2021
(51) Int. Cl.: A01K 11/00, G06Q 50/30

(54) **SYSTEMS AND METHODS FOR CONFIRMING AN IDENTITY OF A SERVICE ANIMAL**

(30) Priority: 20.07.2020 US 202063053913 P; 14.07.2021 US 202117375069
(71) Applicant: The Boeing Company, Chicago, IL 60606-2016 (US)
(72) Inventor: VANDEWALL, Cynthia A., CHICAGO, 60606-201 (US); LANE, Blake, CHICAGO, 60606-201 (US); YERSKY, Cassandra, CHICAGO, 60606-201 (US); VOGEL, Craig, CHICAGO, 60606-201 (US)
(74) Representative: Plasseraud IP

(57) **Abstract**

A system and method for identifying a service animal, include an identification device associated with the service animal. The identification device identifies the service animal. The identification device includes a storage medium that stores service animal profile data that includes information identifying the service animal. The service animal profile data is configured to be analyzed by an admission sub-system to confirm an identify of the service animal.

## Description

### FIELD OF THE DISCLOSURE

Embodiments of the present disclosure generally relate to systems and methods for confirming identities of service animals, and admitting the service animals into a location, such as an assisted living residence, or vehicle, such as a commercial aircraft.

### BACKGROUND OF THE DISCLOSURE

Commercial aircraft are used to transport passengers between various locations. Numerous aircraft depart from and arrive at a typical airport every day.

Certain individuals are assisted by service animals. For example, some visually-impaired individuals own seeing-eye dogs. As another example, some individuals own emotional support animals. As another example, some individuals own animals that are able to detect certain medical conditions of their owners, such as an early stage of a seizure. Accordingly, various individuals may travel with such service animals.

However, other individuals may desire to travel with pets, and, for various reasons, may unscrupulously claim the pets are required service individuals. As an example, the cost of a ticket for a service animal on a flight may be free or otherwise less than that of an ordinary pet. Further, certain animals may be too large to be permitted into an internal cabin of an aircraft, unless they are service animals.

As can be appreciated, airport personnel (such as security agents, gate agents, and/or flight attendants) are tasked with determining whether or not an animal that is to board an aircraft is, in fact, a service animal. In particular, aircraft personnel often need to ask for documented proof (for example, official veterinary documents) that confirm that an animal is actually a registered service animal. The documented proof typically includes a signature from a veterinarian attesting that the animal is a service animal, and/or from a medical doctor or therapist indicating that the owner requires such a service animal. The process of inquiring about, and reviewing such documented proof may be awkward and is typically time-consuming.

Additionally, a passenger intending to fly with an animal usually needs to notify an aircraft operator at least forty-eight hours in advance of a flight that the animal will be flying with them. If the animal is a personal pet and not a service animal, the passenger is required to pay a fee to bring the animal on board. If the animal is a service animal, certain passengers can bring such animal on for free with sufficient documentation (such as a travel letter, harness, identification card, etc.). As noted, due to the fee for pets aboard an aircraft, unscrupulous individuals may be tempted to lie about the nature of their animals to save money.

A flight attendant can usually detect an animal that is not acting like a trained service animal and, in extreme cases, may ask that the owner and associated animal be escorted from the aircraft due to safety issues, which may be awkward and difficult for the flight attendant (particular if the passenger causes a disruption), and delay a departure time. Certain individuals will go to almost unbelievable lengths to be able to bring their animals on flights. However, lying about the nature of an animal to ensure that the animal is within an internal cabin during a flight causes safety issues (for example, undocumented and/or incorrectly-documented animals may walk or run around the internal cabin, chew cords, cause sanitation issues, and/or the like), and may cause other passengers to be skeptical of those with animals on a flight, even for those who need service animals.

### SUMMARY OF THE DISCLOSURE

A need exists for a system and method of efficiently and effectively identifying service animals and admitting service animals into a vehicle. Further, a need exists for a system and method of verifying that an animal that is to board a vehicle is, in fact, a service animal.

With those needs in mind, certain embodiments of the present disclosure provide a system for identifying a service animal. The system includes an identification device associated with the service animal. The identification device identifies the service animal. The identification device includes a storage medium that stores service animal profile data that includes information identifying the service animal. The service animal profile data is configured to be analyzed by an admission sub-system to confirm an identify of the service animal.

In at least one embodiment, the identification device further includes a substrate that supports the storage medium. For example, the substrate is or includes one or more of an integrated chip, a circuit board, or a radio frequency identification (RFID) tag.

The service animal profile data includes one or more of an animal identifier that identifies the service animal associated with the identification device, service authorization information that indicates and confirms authorization as a service animal, travel documentation, health information, an owner identifier that links the service animal with an owner, and/or one or both of travel history or tracking information.

In at least one embodiment, an owner device is in communication with the identification device. The owner device is configured to one or both of transmit the service animal profile data to the identification device, or update the service animal profile data stored on the storage medium.

In at least one embodiment, the system further includes the admission sub-system. The admission sub-system includes an admission control unit that analyzes the service animal profile data. The admission control unit is configured to receive the service animal profile data from the identification device when the identification device is within a predetermined proximity of the admission sub-system.

In at least one embodiment, the admission sub-system includes a housing through which the service animal is configured to pass.

In at least one embodiment, the admission sub-system includes a display in communication with the admission control unit. The display is configured to show information regarding the service animal, as determined by the admission control unit from the service animal profile data. For example, the display is configured to show a registered service animal area, a required documentation area, a boarding ticket area, and/or a security clearance area.

In at least one embodiment, a service animal database is in communication with the admission sub-system. The service animal database includes data regarding a plurality of service animals.

In at least one embodiment, a collar configured to be worn by the service animal includes the identification device. As another example, an animal carrier configured to retain the service animal within an internal chamber includes the identification device. As another example, a harness configured to be worn by the service animal includes the identification device. As another example, a leash includes the identification device. As another example, the identification device includes a coupling housing that removably couples the leash to the collar. As another example, the identification device is implanted into a portion of the service animal.

Certain embodiments of the present disclosure provide a method for identifying a service animal. The method includes associating an identification device with the service animal, and identifying the service animal by the identification device. Said identifying includes storing, in a storage medium of the identification device, service animal profile data that includes information identifying the service animal. The service animal profile data is configured to be analyzed by an admission sub-system to confirm an identify of the service animal.

Certain embodiments of the present disclosure provide a system for identifying a service animal. The system includes an admission sub-system that is configured to confirm an identity of the service animal. The admission sub-system includes an admission control unit that is configured to analyze service animal profile data received from an identification device associated with the service animal to confirm the identity of the service animal.

Certain embodiments of the present disclosure provide a method for identifying a service animal. The method includes confirming, by an admission sub-system, an identity of the service animal. Said confirming includes analyzing, by an admission control unit, service animal profile data received from an identification device associated with the service animal to confirm the identity of the service animal.

### BRIEF DESCRIPTION OF THE DRAWINGS

Figure 1 illustrates a block diagram of a system for identifying a service animal, according to an embodiment of the present disclosure.
Figure 2 illustrates a schematic block diagram of a control unit, according to an embodiment of the present disclosure.
Figure 3 illustrates a perspective front view of an identification device, according to an embodiment of the present disclosure.
Figure 4 illustrates a perspective side view of a collar including an identification device, according to an embodiment of the present disclosure.
Figure 5 illustrates a perspective side view of an animal carrier including an identification device, according to an embodiment of the present disclosure.
Figure 6 illustrates a side view of a harness including an identification device, according to an embodiment of the present disclosure.
Figure 7 illustrates a perspective view of a leash that couples to a collar through an identification device, according to an embodiment of the present disclosure.
Figure 8 illustrates a perspective view of a dog having an identification device, according to an embodiment of the present disclosure.
Figure 9 illustrates a front view of an owner device, according to an embodiment of the present disclosure.
Figure 10 illustrates a lateral view of a service animal proximate to an admission sub-system, according to an embodiment of the present disclosure.
Figure 11 illustrates a perspective lateral view of an admission sub-system, according to an embodiment of the present disclosure.
Figure 12 illustrates a front view of a display of the admission sub-system, according to an embodiment of the present disclosure.
Figure 13 illustrates a flow chart of a method of confirming an identity of a service animal for a trip aboard a vehicle, according to an embodiment of the present disclosure.
Figure 14 illustrates a flow chart of a method of identifying a service animal, according to an embodiment of the present disclosure.
Figure 15 illustrates a front perspective view of an aircraft, according to an exemplary embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

Certain embodiments of the present disclosure provide a system and method for clearing an animal (such as a pet and/or service animal) for a trip aboard a vehicle, such as a commercial aircraft. In at least one embodiment, the system and method include an identification device that identifies an animal as a verified service animal. The identification device may be part of a tag, badge, collar, sticker, carrier, and/or may be implanted in a portion of the animal. The identification device is a digital identification device for animals that allows owners to transfer data to and from other devices, such as via near-field communication. In at least one embodiment, the identification device includes a ticket for aviation travel use. After setting up an owner and pet profile via an application, for example, the owner can sync the data into the identification device. When purchasing a ticket for a flight, the owner can simply indicate that they will be traveling with an animal and insert the identification number associated with the identification device. The appropriate data is then shared with the airline directly giving them notice that an animal will be flying on an upcoming flight. The identification device also expedites screenings performed by the Transportation Securing Administration (TSA) screenings, arrival city regulations and requirements, and/or international country requirements.

The systems and methods described herein helps individuals display and share their pet information in an efficient manner to airline officials. Instead of the current method (pieces of paper and verbal assurances), embodiments of the present disclosure provide efficient and effective digital systems and methods for admitting service animals into a vehicle. For example, all of the required information for the animal to travel is stored within an identification device that airline officials and crew members can easily gain access to, such as via near-field communication. Embodiments of the present disclosure save time, and increase confidence of those onboard a vehicle that the service animals within an internal cabin are, in fact, service animals.

Certain embodiments of the present disclosure provide an identification device for a service animal. The identification device includes a substrate, such as a tag (for example, a radio frequency identification (RFID) tag), sticker, integrated chip, and/or the like that is that is readable by an electronic device, such as an admission control unit. The admission control unit analyzes data stored on the substrate to determine whether or not the animal is a service animal or not.

Embodiments of the present disclosure provide systems and methods for identifying and confirming an animal as being a service animal. The systems and methods may be used in various settings, such as with respect to admitting the service animal into various settings, such as vehicles, buildings (for example, apartment buildings, assisted living homes, nursing homes, etc.), events (whether indoor or outdoor), and/or the like. The systems and methods disclosed here are configured to identify service animals, as well as assist in authenticating and authorizing certain animals as service animals.

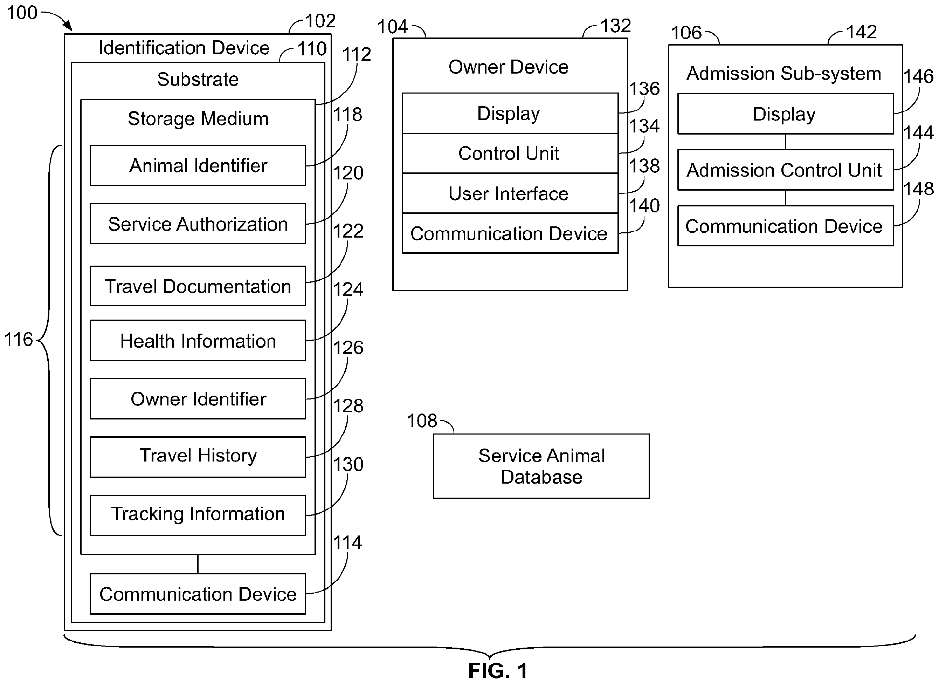

Figure 1 illustrates a block diagram of a system 100 for identifying a service animal, according to an embodiment of the present disclosure. In at least one embodiment, the system 100 includes an identification device 102, an owner device 104, an admission sub-system 106, and a service animal database 108.

The identification device 102 is associated with an animal and identifies the animal as a service animal. The identification device 102 does not merely identify an animal, such a dog tag showing the name of a family dog. Rather, the identification device 102 specifically identifies an animal as an approved, registered, authorized, or otherwise acceptable service animal. The identification device 102 includes a substrate 110 that supports a storage medium 112 coupled to a communication device 114. Examples of the substrate 110 include one or more of an integrated chip, a circuit board, a radio frequency identification (RFID) tag, a sticker, and/or the like.

Data stored by the storage medium 112 is readable by the admission sub-system 106, such as an admission control unit 144 of the admission sub-system 106. The storage medium 112 is or includes one or more memories, data stores, and/or the like that stores service animal profile data 116. The service animal profile data 116 includes an animal identifier 118 (such as a name and/or number) that identifies the service animal associated with the identification device 102. The service animal profile data 116 also includes service authorization information 120 that indicates and confirms that the animal is authorized as a service animal. In at least one embodiment, the service animal profile data 116 also includes travel documentation 122, such as an electronic ticket for the service animal. In at least one embodiment, the service animal profile data 116 also include health information 124, such as a record of vaccinations and immunizations, recorded times of previous feedings, and/or the like. In at least one embodiment, the service animal profile data 116 also includes an owner identifier 126, which links the service animal with a passenger traveling with the service animal. In at least one embodiment, the service animal profile data 116 also includes travel history 128, which allows screeners to determine where the service animal has traveled, and/or tracking information 130, which allows screeners to determine locations where the service animal has recently been.

The communication device 114 is or includes one or more antennas, transceivers, and/or the like that allow the identification device 102 to wirelessly communicate with the owner device 104 and the admission sub-system 106. For example, the communication device 114 is configured to allow the identification device 102 to communicate with the owner device 104 and/or the admission sub-system 106 via a near field communication protocol, Bluetooth, WiFi, and/or other communication protocols. Optionally and/or additionally, the communication device 114 allows for wired communication with the owner device 104 and/or the admission sub-system 106, such as via Universal Serial Bus (USB) cord.

As described herein, the system 100 for identifying a service animal includes the identification device 102 associated with the service animal. The identification device 102 identifies the service animal. The identification device 102 includes the storage medium 112 that stores the service animal profile data 116 that includes information identifying the service animal. The service animal profile data 116 is configured to be analyzed (for example, read) by the admission sub-system 106 to confirm the identity of the service animal.

The owner device 104 includes a housing 132 that retains a control unit 134 in communication with a display 136 a user interface 138, and a communication device 140, such as through one or more wired or wireless connections. The display 136 can be a monitor, screen, and/or the like. The user interface 138 includes one or more of a keyboard, mouse, touchscreen interface, and/or the like. In at least one embodiment, the display 136 and the user interface 138 are integrated to provide a touchscreen interface. The communication device 140 includes one or more antennas, transceivers, and/or the like that allow the owner device 104 to communicate with the identification device 102 and/or the admission sub-system 106. For example, the communication device 140 is configured to allow the owner device 104 to communicate with the identification device 102 and/or the admission sub-system 106 via near field communication protocol, Bluetooth, WiFi, and/or other communication protocols. Optionally and/or additionally, the communication device 140 allows for wired communication with the identification device 102 and/or the admission sub-system 106, such as via a Universal Serial Bus (USB) cord.

In at least one embodiment, the owner device 104 is a handheld device, such as a smart phone, smart tablet, and/or the like. As another example, the owner device 104 is or includes a computer, such as a laptop computer. As another example, the owner device 104 is a specialized communication device that is specifically configured to communicate with the identification device 102. For example, the owner device 104 can be a specialized handheld service animal communication device.

The admission sub-system 106 includes a housing 142 that contains or otherwise retains an admission control unit 144 in communication with a display 146 and a communication device 148, such as through one or more wired or wireless connections. The display 146 can be a monitor, screen, or the like. The communication device 148 includes one or more one or more sensors, antennas, transceivers, and/or the like that allow the admission sub-system 106 to communicate with the identification device 102 and/or the owner device 104. For example, the communication device 148 is configured to allow the admission sub-system 106 to communicate with the identification device 102 and/or the owner device 104 via proximity sensing, a near field communication protocol, Bluetooth, WiFi, and/or other communication protocols. Optionally and/or additionally, the communication device 148 allows for wired communication with the identification device 102 and/or the owner device 104, such as via a Universal Serial Bus (USB) cord.

In at least one embodiment, the system 100 also includes The identification device 102, the owner device 104, and/or the admission sub-system 106 can be in communication with the service animal database, either directly through wired or wireless connections, and/or indirectly, such as via one or more intermediary devices or services (such as the Internet). The service animal database 108 may be or include a central repository of data regarding service animals, such as stored by veterinarians, health care professionals (such as doctors and therapists) and/or the like. The service animal database 108 includes data regarding service animals within a particular area, region, country, and/or the world. The admission control unit 144 can cross-check the service animal profile data 116 with the data of the service animal database 108 to confirm the accuracy of the service animal profile data 116. Optionally, the system 100 may not include the service animal database 108.

In operation, an owner of a service animal can transmit (for example, download) the service animal profile data 116 and/or update the service animal profile data 116 to the identification device 102 via the owner device 104. In at least one embodiment, the service animal profile data 116 includes information that confirms that the animal associated with the identification device 102 is, in fact, a service animal. Such information can be approved by one or more authorities, such as a veterinarian, a health care professional, a regulatory agency, and/or the like, and may include authoritative confirmation information, such as may be stored within the service animal database 108. The service animal profile data 116 is stored within the storage medium 112 of the identification device 102. As another example, the service animal profile data 116 may be transmitted (for example, downloaded) directly to the identification device 102 by an authority, such as a veterinarian, health care profession, and/or the like.

As an owner books travel, such as through an airline website, the owner may input at least portions of the service animal profile data 116 with their reservation. As such, the reservation will automatically confirm that the service animal associated with the identification device 102 will travel with the owner.

In at least one embodiment, the systems and methods described herein are also configured to conform identifies of animals (such as pets), credentials to travels, and the like, as described herein, whether or not the animal is a service animal.

As the owner checks in during the date of travel, the admission control unit 144 communicates with the identification device 102. For example, the admission sub-system 106 may be located at a gate of an airport, a security station, and/or the like. The admission control unit 144 receives the service animal profile data 116 from the identification device 102, such as when the identification device 102 is within close proximity (such as within five feet or less) of the admission sub-system 106. If the admission control unit 144 determines from the service animal profile data 116 that the animal is a service animal and the owner is associated with the service animal, the admission control unit 144 outputs a signal, such as an audio signal broadcast through a speaker and/or a visual signal shown on the display 146, that the service animal is confirmed for admission into a vehicle, such as a commercial aircraft, for travel to a defined destination (such as indicated on the travel documentation 122). In at least one embodiment, the admission control unit 144 cross-checks at least portions of the service animal profile data 116 with data stored in the service animal database 108 to provide redundant confirmation that the animal is, in fact, a service animal. If, however, the admission control unit 144 determines from the service animal profile data that the animal is not one or more of: (a) the animal associated with the animal identifier 118, (b) authorized as a service animal per the service authorization information 120, (c) associated with the owner indicated in the owner identifier 126, or (d) scheduled for a scheduled trip per the travel documentation 122, and/or at a prohibited or restricted location per the travel history 128 and/or the tracking information 130, the admission control unit 144 outputs a signal, such as an audio signal broadcast through a speaker and/or a visual signal shown on the display 146, that the service animal is denied admission into the vehicle. As such, the admission control unit 144 of the admission sub-system 106 analyzes the service animal profile data 116 to determine whether an animal associated with the identification device is authorized for travel within a vehicle.

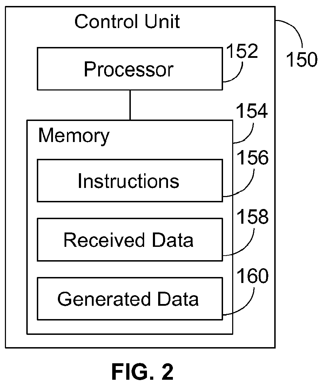

Figure 2 illustrates a schematic block diagram of a control unit 150, according to an embodiment of the present disclosure. The control unit 134 and the admission control unit 144 can be configured as shown in Figure 2. In at least one embodiment, the control unit 150 includes at least one processor 152 in communication with a memory 154. The memory 154 stores instructions 156, received data 158, and generated data 160. The control unit 150 shown in Figure 2 is merely exemplary, and non-limiting.

As used herein, the term "control unit," "central processing unit," "unit," "CPU," "computer," or the like can include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 134 and the admission control unit 144 can be or include one or more processors that are configured to control operation thereof, as described herein.

The control unit 134 and the admission control unit 144 are configured to execute a set of instructions that are stored in one or more data storage units or elements (such as one or more memories), in order to process data. For example, the control unit 134 and the admission control unit 144 can include or be coupled to one or more memories. The data storage units can also store data or other information as desired or needed. The data storage units can be in the form of an information source or a physical memory element within a processing machine. The one or more data storage units or elements can comprise volatile memory or nonvolatile memory, or can include both volatile and nonvolatile memory. As an example, the nonvolatile memory can comprise read only memory (ROM), programmable ROM (PROM), electrically programmable ROM (EPROM), electrically erasable PROM (EEPROM), and/or flash memory and volatile memory can include random access memory (RAM), which can act as external cache memory. The data stores of the disclosed systems and methods is intended to comprise, without being limited to, these and any other suitable types of memory.

The set of instructions can include various commands that instruct the control unit 134 and the admission control unit 144 as a processing machine to perform specific operations such as the methods and processes of the various embodiments of the subject matter described herein. The set of instructions can be in the form of a software program. The software can be in various forms such as system software or application software. Further, the software can be in the form of a collection of separate programs, a program subset within a larger program or a portion of a program. The software can also include modular programming in the form of object-oriented programming. The processing of input data by the processing machine can be in response to user commands, or in response to results of previous processing, or in response to a request made by another processing machine.

The diagrams of embodiments herein can illustrate one or more control or processing units, such as the control unit 134 and the admission control unit 144. It is to be understood that the processing or control units can represent circuits, circuitry, or portions thereof that can be implemented as hardware with associated instructions (e.g., software stored on a tangible and non-transitory computer readable storage medium, such as a computer hard drive, ROM, RAM, or the like) that perform the operations described herein. The hardware can include state machine circuitry hardwired to perform the functions described herein. Optionally, the hardware can include electronic circuits that include and/or are connected to one or more logic-based devices, such as microprocessors, processors, controllers, or the like. Optionally, the control unit 134 and the admission control unit 144 can represent processing circuitry such as one or more of a field programmable gate array (FPGA), application specific integrated circuit (ASIC), microprocessor(s), and/or the like. The circuits in various embodiments can be configured to execute one or more algorithms to perform functions described herein. The one or more algorithms can include aspects of embodiments disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

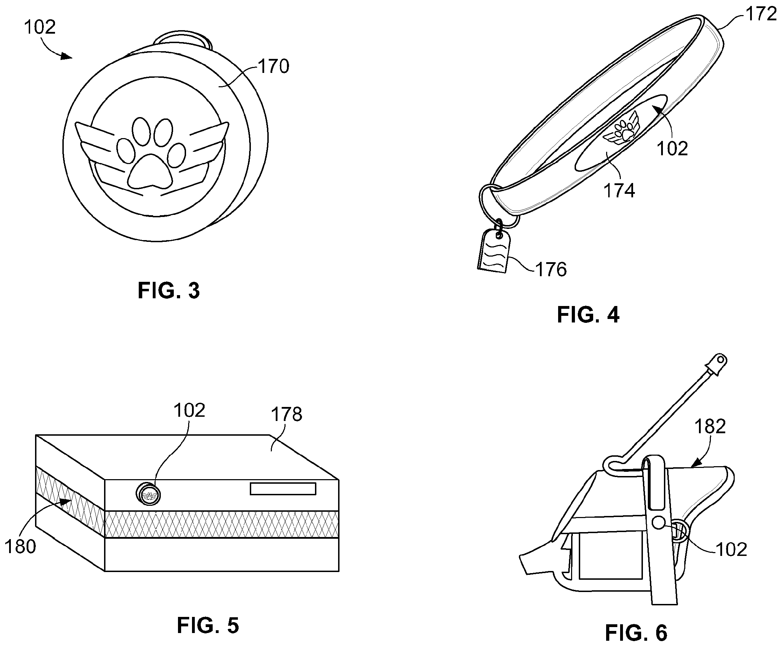

Figure 3 illustrates a perspective front view of the identification device 102, according to an embodiment of the present disclosure. Referring to Figures 1 and 3, the identification device 102 includes a housing 170, such as a badge, tag, medallion, or the like that retains the substrate 110, which supports the storage medium 112 and the communication device 114. That is, the substrate 110 having the storage medium 112 and the communication device 114 may be retained within the housing 170.

Figure 4 illustrates a perspective side view of a collar 172 including the identification device 102, according to an embodiment of the present disclosure. The collar 172 is configured to be worn around the neck of a service animal, such as a service dog. The identification device 102 may be embedded within the collar 172. As another example, the identification device 102 may include a main body 174 (such as a sticker, decal, tag, strip, or the like) or housing coupled to the collar 172. As another example, the identification device 102 may be embedded within or coupled to a tag 176 coupled to the collar 172.

Figure 5 illustrates a perspective side view of an animal carrier 178 including the identification device 102, according to an embodiment of the present disclosure. The animal carrier 178 is configured to retain a service animal within an internal chamber 180 and be carried by an owner. The identification device 102 may be embedded within a portion of the animal carrier 178 or otherwise secured to the animal carrier 178. As another option, the identification device 102 may be removably secured to the animal carrier 178. For example, the identification device 102 may be a medallion that is secured to the animal carrier 178 when an animal is retained therein, and removed and secured to a collar of the animal when the animal is outside of the animal carrier 178. The identification device 102 can be disposed at various other portions of the animal carrier 178 other than shown.

Figure 6 illustrates a side view of a harness 182 including the identification device 102, according to an embodiment of the present disclosure. The harness 182 is configured to be worn by of a service animal. The identification device 102 may be embedded within a portion of the harness 182 or otherwise secured to the harness 182. The identification device 102 can be disposed at various other portions of the harness 182 other than shown.

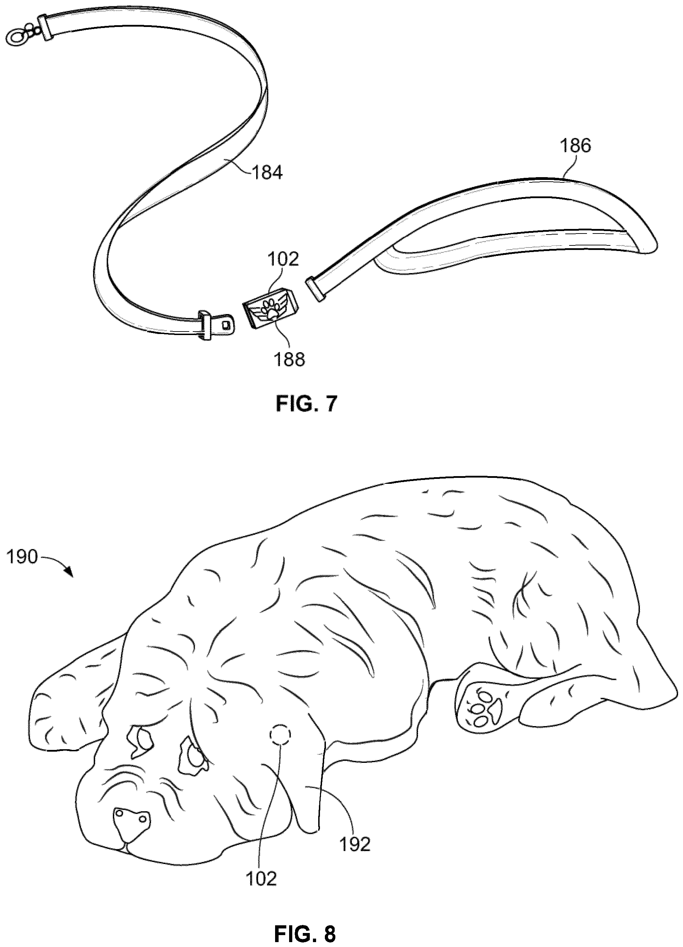

Figure 7 illustrates a perspective view of a leash 184 that couples to a collar 186 through an identification device 102, according to an embodiment of the present disclosure. In at least one embodiment, the identification device 102 includes a coupling housing 188 that removably couples the leash 184 to the collar 186, such as through a snapable, latchable, or other such connection. As another example, the identification device 102 may be embedded within, or otherwise coupled to the leash 184 or the collar 186.

Figure 8 illustrates a perspective view of a dog 190 having the identification device 102, according to an embodiment of the present disclosure. In at least one embodiment, the identification device 102 can be implanted into a portion of the dog 190 or another animal, such as within an ear 192 of the dog 190.

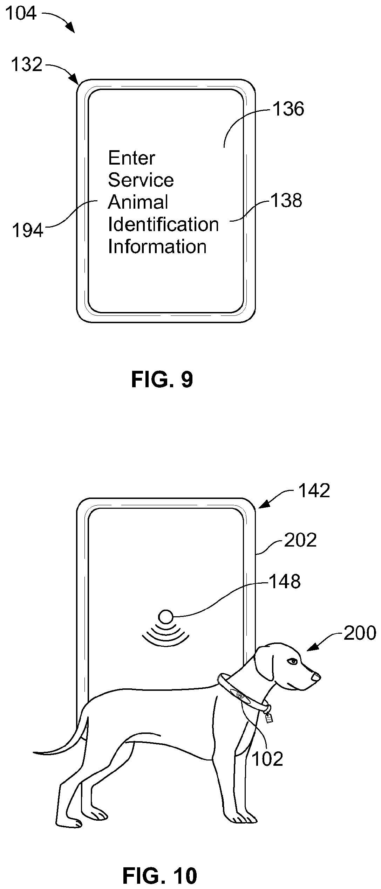

Figure 9 illustrates a front view of the owner device 104, according to an embodiment of the present disclosure. The owner device 104 may be a handheld device, such as a smart phone or smart tablet. Referring to Figures 1 and 9, the display 136 shows messages 194 that allow the owner to interact with the identification device 102, such as to download or update the service animal profile data 116 within the storage medium 112 of the identification device 102.

Figure 10 illustrates a lateral view of a service animal 200 proximate to the admission sub-system 106, according to an embodiment of the present disclosure. Referring to Figures 1 and 10, in at least one embodiment, the admission sub-system 106 includes a housing 202, such as a gate, tunnel, threshold, or the like, through which the service animal 200 passes. The communication device 148 may be a sensor that detects the identification device 102 within a predetermined detection range (such as within 3 feet or less), and receives the service animal profile data 116 from the identification device 102 as the service animal 200 passes through or otherwise by the housing 202. As another example, the communication device 148 may be a touch sensor that receives the service animal profile data 116 as a portion of the identification device 102, such as a housing of the identification device 102, touches the communication device 148. As another example, the communication device 148 may receive the service animal profile data 116 in response to the identification device 102 coupling to the communication device 148 through a wired connection, such as a USB cord.

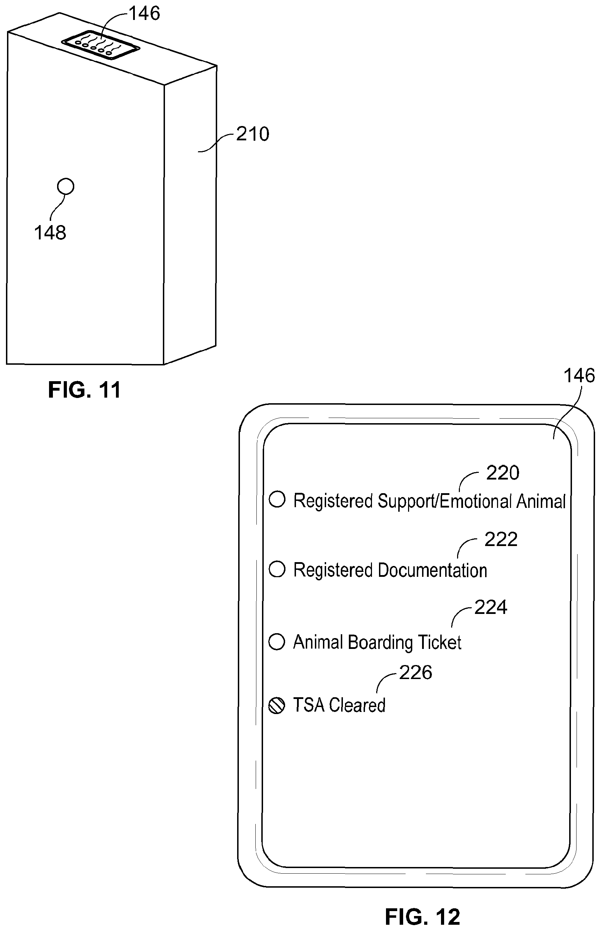

Figure 11 illustrates a perspective lateral view of the admission sub-system 106, according to an embodiment of the present disclosure. Referring to Figures 1 and 11, in at least one embodiment, the admission sub-system 106 includes a housing 210. The communication device 148, such as a sensor, is mounted on the housing 210. The communication device 148 detects the presence of, and receives the service animal profile data 116 from, the identification device 102 within the predetermined detection range. In contrast to a gate, tunnel, or the like through which an animal passes through, the housing 210 can be an upright kiosk, column, or the like. A service animal may walk past the housing 210.

Figure 12 illustrates a front view of the display 146 of the admission sub-system 106, according to an embodiment of the present disclosure. Referring to Figures 1 and 12, the display 146 shows information regarding a service animal, as determined from the service animal profile data 116. For example, the display 146 includes a registered service animal area 220 that indicates whether or not the animal is a service animal (based on the service animal information profile 116), a required documentation area 220 that indicates whether or not the animal has all necessary documentation for a service animal (based on the service animal information profile 116), a boarding ticket area 224 that indicates whether or not the animal has a valid boarding ticket for travel (based on the service animal information profile 116), and/or a security clearance area 226 that indicates whether or not the service animal has cleared a security checkpoint. The display 146 may show more or less information than shown. It is to be understood that the information shown in Figure 12 is merely exemplary, and not limiting.

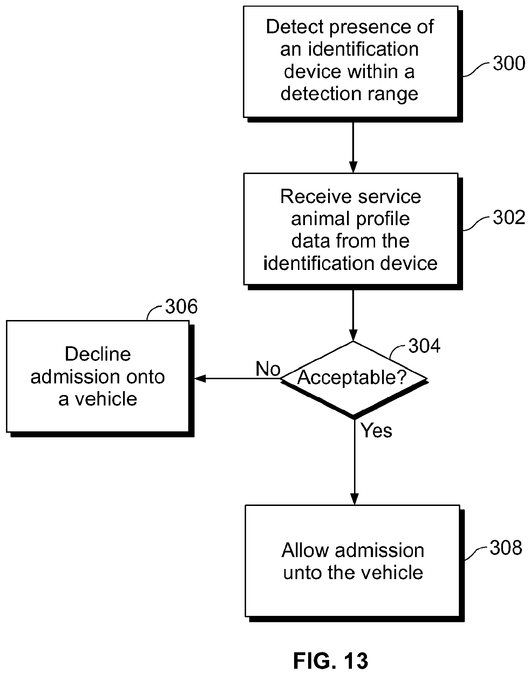

Figure 13 illustrates a flow chart of a method of confirming an identity of a service animal for a trip aboard a vehicle, according to an embodiment of the present disclosure. Referring to Figures 1 and 13, at 300, the admission control unit 144 detects a presence of the identification device 300 within the detection range, such as through the communication device 148. At 302, the admission control unit 144 receives the service animal profile data 116 from the identification device 102. At 304, the admission control unit 144 determines if the service animal profile data 116 is acceptable (such as, for example, the service animal profile data 116 indicates that the animal is a service animal owned by the associated traveling owner, and the service animal is booked on an indicated trip of the vehicle). If the service animal profile data 116 is not acceptable, the admission control unit 144 outputs a decline signal, at 306, which indicates (such as through audio, video, text, graphics, and/or the like) that the animal is declined admission onto the vehicle. If, however, the service animal profile data 116 is acceptable, the admission control unit 144 outputs an admit signal, at 308, which indicates that the service animal is allowed admission onto the vehicle.

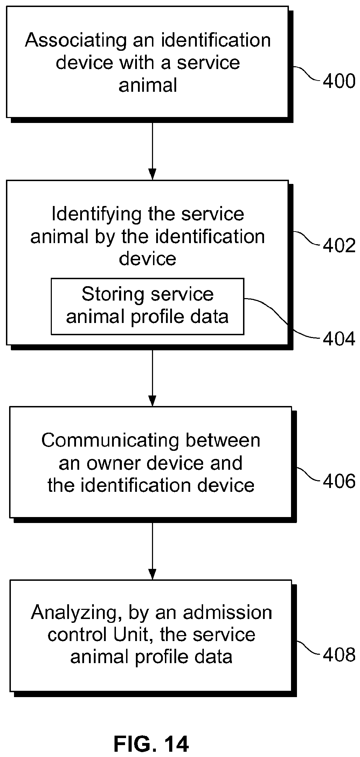

Figure 14 illustrates a flow chart of a method for identifying a service animal. Referring to Figures 1 and 14, the method includes associating, at 400, the identification device 102 with the service animal; and identifying, at 402 the service animal by the identification device. Said identifying 402 includes comprises storing, at 404, in a storage medium of the identification device, the service animal profile data 116 that includes information identifying the service animal. The service animal profile data is configured to be analyzed by an admission sub-system to confirm the identity of the service animal.

In at least one embodiment, the method also includes communicating, at 406, between the owner device 104 and the identification device 102. In at least one embodiment, said communicating 406 includes one or both of transmitting, by the owner device 104, the service animal profile data 116 to the identification device 102, or updating, by the owner device 104, the service animal profile data 116 stored by the storage medium 112.

In at least one embodiment, the method also includes analyzing, at 408, by the admission control unit 144 of the admission sub-system 106, the service animal profile data 116. In at least one embodiment, the method also includes receiving, by the admission control unit 144, the service animal profile data 116 from the identification device 102 when the identification device 102 is within a predetermined proximity of the admission sub-system 106.

In at least one embodiment, the method also includes showing, on the display 146 of the admission sub-system 106 that is in communication with the admission control unit 144, information regarding the service animal, as determined by the admission control unit 144 from the service animal profile data 116.

In at least one embodiment, the method also includes communicatively coupling the service animal database 108 with the admission sub-system 106. The service animal database 108 includes data regarding a plurality of service animals.

Embodiments of the present disclosure provide systems and methods that allow large amounts of data to be quickly and efficiently analyzed by a computing device. For example, the documentation for a service animal by itself, let alone numerous service animals, is typically extensive. As such, large amounts of data are being tracked and analyzed. The vast amounts of data are efficiently organized and/or analyzed by the admission control unit 144, as described above. The admission control unit 144 analyzes the data in a relatively short time in order to quickly and efficiently output and/or display whether or not an animal is cleared for travel as a service animal. As such, embodiments of the present disclosure provide increased and efficient functionality, and vastly superior performance in relation to a human being analyzing the vast amounts of data (such as data regarding travel history of individuals and their animals, whether or not service animals).

In at least one embodiment, components of the system 100, such as the admission control unit 144, provide and/or enable a computer system to operate as a special computer system for identifying service animals and attributes thereof.

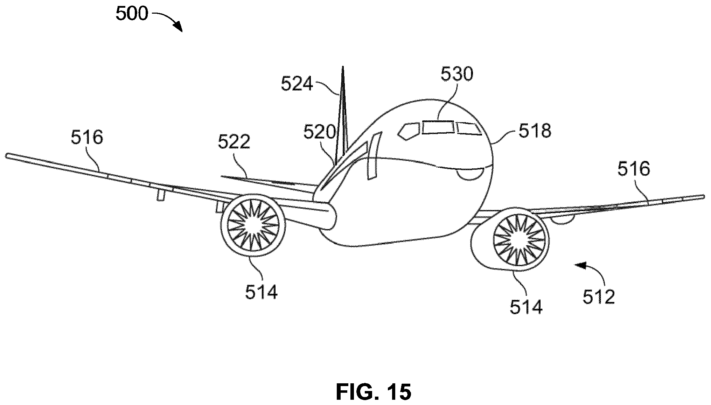

Figure 15 illustrates a front perspective view of an aircraft 500, according to an exemplary embodiment of the present disclosure. The aircraft 500 includes a propulsion system 512 that can include two engines 514, for example. Optionally, the propulsion system 512 can include more engines 514 than shown. The engines 514 are carried by wings 516 of the aircraft 500. In other embodiments, the engines 514 can be carried by a fuselage 518 and/or an empennage 520. The empennage 520 can also support horizontal stabilizers 522 and a vertical stabilizer 524. The fuselage 518 of the aircraft 500 defines an internal cabin, which can include a cockpit 530, one or more work sections (for example, galleys, personnel carry-on baggage areas, and the like), and/or one or more passenger sections. Embodiments of the present disclosure provide systems and methods for admitting service dogs into the internal cabin of the aircraft 500.

Further, the disclosure comprises embodiments according to the following clauses:
Clause 1. A system for identifying a service animal, the system comprising:
   an identification device associated with the service animal, wherein the identification device identifies the service animal,
   wherein the identification device includes a storage medium that stores service animal profile data that includes information identifying the service animal, and
   wherein the service animal profile data is configured to be analyzed by an admission sub-system to confirm an identity of the service animal.
Clause 2. The system of clause 1, wherein the identification device further comprises a substrate that supports the storage medium.
Clause 3. The system of clause 2, wherein the substrate is or includes one or more of an integrated chip, a circuit board, or a radio frequency identification (RFID) tag.
Clause 4. The system of clause 1, 2, or 3, wherein the service animal profile data comprises an animal identifier that identifies the service animal associated with the identification device.
Clause 5. The system of any one of clauses 1-4, wherein the service animal profile data comprises service authorization information that indicates and confirms authorization as a service animal.
Clause 6. The system of any one of clauses 1-5, wherein the service animal profile data comprises travel documentation.
Clause 7. The system of any one of clauses 1-6, wherein the service animal profile data comprises health information.
Clause 8. The system of any one of clauses 1-7, wherein the service animal profile data comprises an owner identifier that links the service animal with an owner.
Clause 9. The system of any one of clauses 1-8, wherein the service animal profile data comprises one or both of travel history or tracking information.
Clause 10. The system of any one of clauses 1-9, wherein the service animal profile data comprises:
   an animal identifier that identifies the service animal associated with the identification device;
   service authorization information that indicates and confirms authorization as a service animal;
   travel documentation;
   health information;
   an owner identifier that links the service animal with an owner; and
   one or both of travel history or tracking information.
Clause 11. The system of any one of clauses 1-10, further comprising an owner device in communication with the identification device.
Clause 12. The system of clause 11, wherein the owner device is configured to one or both of transmit the service animal profile data to the identification device, or update the service animal profile data stored on the storage medium.
Clause 13. The system of any one of clauses 1-12, further comprising the admission sub-system, wherein the admission sub-system comprises an admission control unit that analyzes the service animal profile data.
Clause 14. The system of clause 13, wherein the admission control unit is configured to receive the service animal profile data from the identification device when the identification device is within a predetermined proximity of the admission sub-system.
Clause 15. The system of clause 13 or 14, wherein the admission sub-system comprises a housing through which the service animal is configured to pass.
Clause 16. The system of clause 13, 14, or 15, wherein the admission sub-system further comprises a display in communication with the admission control unit, wherein the display is configured to show information regarding the service animal, as determined by the admission control unit from the service animal profile data.
Clause 17. The system of clause 16, wherein the display is configured to show:
   a registered service animal area;
   a required documentation area;
   a boarding ticket area; and
   a security clearance area.
Clause 18. The system of any one of clauses 1-17, further comprising a service animal database in communication with the admission sub-system, wherein the service animal database includes data regarding a plurality of service animals.
Clause 19. The system of any one of clauses 1-18, further comprising a collar configured to be worn by the service animal, wherein the collar includes the identification device.
Clause 20. The system of any one of clauses 1-19, further comprising an animal carrier configured to retain the service animal within an internal chamber, wherein the animal carrier comprises the identification device.
Clause 21. The system of any one of clauses 1-20, further comprising a harness configured to be worn by the service animal, wherein the harness comprises the identification device.
Clause 22. The system of any one of clauses 1-21, further comprising a leash, wherein the leash comprises the identification device.
Clause 23. The system of any one of clauses 1-22, further comprising a leash and a collar, wherein the identification device comprises a coupling housing that removably couples the leash to the collar.
Clause 24. The system of any one of clauses 1-23, wherein the identification device is implanted into a portion of the service animal.
Clause 25. A method for identifying a service animal, the method comprising:
   associating an identification device with the service animal; and
   identifying the service animal by the identification device,
   wherein said identifying comprises storing, in a storage medium of the identification device, service animal profile data that includes information identifying the service animal, wherein the service animal profile data is configured to be analyzed by an admission sub-system to confirm an identify of the service animal.
Clause 26. The method of clause 25, wherein the service animal profile data comprises one or more of :
   an animal identifier that identifies the service animal associated with the identification device;
   service authorization information that indicates and confirms authorization as a service animal;
   travel documentation; health information;
   an owner identifier that links the service animal with an owner; or
   one or both of travel history or tracking information.
Clause 27. The method of clause 26, wherein the service animal profile data comprises:
   an animal identifier that identifies the service animal associated with the identification device;
   service authorization information that indicates and confirms authorization as a service animal;
   travel documentation;
   health information;
   an owner identifier that links the service animal with an owner; and
   one or both of travel history or tracking information.
Clause 28. The method of clause 25, 26, or 27, further comprising communicating between an owner device and the identification device.
Clause 29. The method of clause 28, wherein said communicating comprises one or both of transmitting, by the owner device, the service animal profile data to the identification device, or updating, by the owner device, the service animal profile data stored on the storage medium.
Clause 30. The method of any one of clauses 25-29, further comprising analyzing, by an admission control unit of the admission sub-system, the service animal profile data.
Clause 31. The method of clause 30, further comprising receiving, by the admission control unit, the service animal profile data from the identification device when the identification device is within a predetermined proximity of the admission sub-system.
Clause 32. The method of clause 30 or 31, further comprising showing, on a display of the admission sub-system that is in communication with the admission control unit, information regarding the service animal, as determined by the admission control unit from the service animal profile data.
Clause 33. The method of any one of clauses 25-32, communicatively coupling a service animal database with the admission sub-system, wherein the service animal database includes data regarding a plurality of service animals.
Clause 34. A system for identifying a service animal, the system comprising:
   an admission sub-system that is configured to confirm an identity of the service animal,
   wherein the admission sub-system comprises an admission control unit that is configured to analyze service animal profile data received from an identification device associated with the service animal to confirm the identify of the service animal.
Clause 35. The system of clause 34, further comprising an owner device in communication with one or both of the admission sub-system or the identification device.
Clause 36. The system of clause 35, wherein the owner device is configured to one or both of transmit the service animal profile data to the identification device, or update the service animal profile data stored in a storage medium.
Clause 37. The system of clause 34, 35, or 36, wherein the admission control unit is configured to receive the service animal profile data from the identification device when the identification device is within a predetermined proximity of the admission sub-system.
Clause 38. The system of any one of clauses 34-37, wherein the admission sub-system comprises a housing through which the service animal is configured to pass.
Clause 39. The system of any one of clauses 34-38, wherein the admission sub-system further comprises a display in communication with the admission control unit, wherein the display is configured to show information regarding the service animal, as determined by the admission control unit from the service animal profile data.
Clause 40. The system of clause 39, wherein the display is configured to show:
   a registered service animal area;
   a required documentation area;
   a boarding ticket area; and
   a security clearance area.
Clause 41. The system of any one of clauses 34-40, further comprising a service animal database in communication with the admission sub-system, wherein the service animal database includes data regarding a plurality of service animals.
Clause 42. A method for identifying a service animal, the method comprising:
   confirming, by an admission sub-system, an identity of the service animal,
   wherein said confirming comprises analyzing, by an admission control unit, service animal profile data received from an identification device associated with the service animal to confirm the identity of the service animal.
Clause 43. The method of clause 42, further comprising communicatively coupling an owner device with one or both of the admission sub-system or the identification device.
Clause 44. The method of clause 43, further comprising one or both of transmitting, by the owner device, the service animal profile data to the identification device, or updating, by the owner device, the service animal profile data stored in a storage medium.
Clause 45. The method of clause 42, 43, or 44, further comprising receiving, by the admission control unit, the service animal profile data from the identification device when the identification device is within a predetermined proximity of the admission sub-system.
Clause 46. The method of any one of clauses 42-45, further comprising showing, on a display in communication with the admission control unit, information regarding the service animal, as determined by the admission control unit from the service animal profile data.

Optionally, embodiments of the present disclosure may be used with respect to various other vehicles (including buses, watercraft, spacecraft, and the like), structures (such as commercial) buildings, or the like.

As described herein, embodiments of the present disclosure provide systems and methods of efficiently and effectively identifying animals (such as pets, service animals, and the like) and admitting animals into a vehicle. Further, embodiments of the present disclosure provide systems and methods of verifying that an animal that is to board a vehicle is, in fact, a service animal. Embodiments of the present disclosure provide systems and methods that improve passenger experience aboard a vehicle, increase travel efficiency, reduce time and labor costs, improve security, and provide more accurate animal documentation and organization.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system for identifying a service animal, the system comprising:
an identification device (102) associated with the service animal, wherein the identification device (102) identifies the service animal,
wherein the identification device (102) includes a storage medium (112) that stores service animal profile data that includes information identifying the service animal, and
wherein the service animal profile data is configured to be analyzed by an admission sub-system (106) to confirm an identity of the service animal.

2. The system of claim 1, wherein the identification device (102) further comprises a substrate (110) that supports the storage medium (112).

3. The system of claim 2, wherein the substrate (110) is or includes one or more of an integrated chip, a circuit board, or a radio frequency identification (RFID) tag.

4. The system of claim 1, 2, or 3, wherein the service animal profile data comprises an animal identifier (118) that identifies the service animal associated with the identification device (102).

5. The system of any one of claims 1-4, wherein the service animal profile data comprises service authorization information that indicates and confirms authorization as a service animal.

6. The system of any one of claims 1-5, wherein the service animal profile data comprises travel documentation.

7. The system of any one of claims 1-6, wherein the service animal profile data comprises health information.

8. The system of any one of claims 1-7, wherein the service animal profile data comprises an owner identifier that links the service animal with an owner.

9. The system of any one of claims 1-8, wherein the service animal profile data comprises one or both of travel history or tracking information.

10. The system of any one of claims 1-9, wherein the service animal profile data comprises:
an animal identifier (118) that identifies the service animal associated with the identification device (102);
service authorization information that indicates and confirms authorization as a service animal;
travel documentation;
health information;
an owner identifier that links the service animal with an owner; and
one or both of travel history or tracking information.

11. The system of any one of claims 1-10, further comprising an owner device in communication with the identification device (102).

12. The system of claim 11, wherein the owner device is configured to one or both of transmit the service animal profile data to the identification device (102), or update the service animal profile data stored on the storage medium (112).

13. The system of any one of claims 1-12, further comprising the admission sub-system (106), wherein the admission sub-system (106) comprises an admission control unit (144) that analyzes the service animal profile data.

14. The system of claim 13, wherein the admission control unit (144) is configured to receive the service animal profile data from the identification device (102) when the identification device (102) is within a predetermined proximity of the admission sub-system (106).

15. The system of claim 13 or 14, wherein the admission sub-system (106) comprises a housing through which the service animal is configured to pass.
